# EUROPEAN PATENT APPLICATION

(11) **EP 0 578 837 A1**
(43) Date of publication of application: **19.01.1994**
(21) Application number: 90850384.0
(22) Date of filing: 26.11.1990
(51) Int. Cl.: B60L 11/12

(54) **Hybrid vehicle**

(30) Priority: 27.11.1989 SE 8903987
(71) Applicant: Abelin, Rudolf K., S-217 58 Malmö (SE); Sundberg, Erik, S-252 39 Helsingborg (SE)
(72) Inventor: Abelin, Rudolf K., S-217 58 Malmö (SE); Sundberg, Erik, S-252 39 Helsingborg (SE)
(74) Representative: Modin, Jan

(57) **Abstract**

A hybrid vehicle has its energy from a heat motor, for example Otto_, diesel_ or Stirling motor connected to a generator giving electric current to one or more electric motors connected to the driving wheels of the vehicle. The heat engine can be exchanged for fuel cells. For occasionally high loads the vehicle has an accumulator, for example a lead-acid battery operating like a super capacitor to give high currents during short times. The energy available during regenerative braking of the vehicle is normally sufficient to charge the battery, which is heavily cooled at charging as well as discharging.

## Description

Electric vehicles used today have accumulators with the highest possible capacity and lowest possible weight. The problem is that all batteries in present regular production are too heavy to make it possible for an electric vehicle to compete with a car using a combustion engine.

There are batteries under development with better performance but nobody knows if and when they will be in normal production. Some of them are high temperature cells with molten sodium and others use free chlorine, both dangerous at traffic accidents. None of the batteries that is being developed can give sufficient mile capacity to the vehicle. Heat engines, mainly combustion engines for gasoline and diesel oil, have an extremely varying efficiency and produce during driving with varying load many times more of exhaust gases per kilometer than at constant load, mainly depending on that the effect and therefore the engine size has been designed for the top load during starting and acceleration, sometimes ten times the effect needed for normal driving as the efficiency at low r.p.m. is very bad for most heat engines. If this engine always operates with constant load it can be adjusted to work with a much better efficiency. Decreasing the exhaust emissions to a minimum and generating the necessary energy is only possible if the heat engine is not mechanically connected to the driving wheels.

Fuel cells and aluminium cells are under development and will probably be able to deliver sufficient effect for the average need of effect, but it is difficult to design the fuel cells for the top effect needed during starting, acceleration and steep hills. How to use hybrid cars, where a combustion engine with an electric generator is charging the batteries during driving to get a longer driving distance is known, but these are still battery operated cars, using the battery constantly. According to our invention a vehicle has a main engine, a heat engine connected to an electric generator supplying current to one or more electric driving motors. The main engine with a generator can also be exchanged for fuel cells or aluminium cells. There is also a small electric accumulator, which works as a buffer or capacitor and gives an extra amplification to the generator at starting, acceleration and extra load as up hill driving. For level driving with normal speed the accumulator is not used.

At any speed the kinetic energy of the vehicle has been generated from the heat engine as well as from the accumulator and when braking with the regenerative motors operating as generators one should get more energy than taken out from the accumulator. The losses in energy through the efficiency of the regenerative braking, the efficiency of the accumulator due to difference in charging and discharging voltage, roll resistance etc., decide the size of the heat engine, as the energy from this engine shall correspond to these losses and to normal driving. At normal driving conditions with a certain speed the energy from the regenerative braking to full stop is sufficient to charge the battery with the same energy amount taken from the battery to bring the vehicle to its present speed.

The main engine (or the fuel cells etc.) does not have to have the full size to drive the car and charge the battery but only the average effect necessary for driving at normal speed and compensate for the loss in efficiency. If the vehicle is moved to a place higher situated during one day, the battery will not be fully loaded and may need an extra charge from the generator.

As the battery only is a part of a power transmission, the weight and dimension should be as small as possible. It is therefore submitted to very high loads and high currents at charge and discharge. Total capacity corresponds to less than 5 min. discharge. The conditions for this type of operation are that the battery is made for the high currents like a starter battery and also that the battery is effectively cooled all the time at charging as well as discharging.

### EXAMPLE 1.

A bus with a weight of 12 ton needs for acceleration to 50 kg/h during 10 sec. an effect of 130 kW and an energy of 350 Wh. Of this energy around 300 Wh is kinetic energy, which more or less can be used by braking and charging of the battery. If we assume that the bus has a main engine, which together with the generator has supplied 60 kW, 70 kW has been delivered by the accumulator during 10 s, or less than 200 Wh. The efficiency of the system should be so good that the kinetic energy of 300 Wh could charge the 195 Wh taken from the battery.

For this heavy vehicle you can use 240 V or with lead-acid batteries 120 cells. Average voltage with this high loads is ca 1,5 V/cell or 180 V for the battery. At 70 kW load the current will be almost 400 A. This corresponds to a "heavy duty" diesel starter battery with a weight of around 35-40 kg for a 24 V unit or 375-400 kg for the 120 cells batteri. The discharging time at this load is over 5 minutes and the energy around 6 kWh.

But the size of the battery must also be matched with the topography. If the bus needs to take out 7 kWh on an uphill road you should for safety reason keep one third of the energy in the battery or only take out 4 kWh. At 60 km/h this corresponds to an uphill road of 4 km.

If we assume that the efficiency of the battery, internal resistance etc. is totally 75% and the battery operates for 50% of the driving time, you have to cool away around 18 kW or 150 Wh/cell all the time.

### EXAMPLE 2.

A car with a weight of 700-1000 kg needs 20-30 kW for fast acceleration to 50 km/h during 3-5 sec. or around 25 Wh. Of this energy 6-12 kW come from the main engine and 15-20 kW from the battery. But this is only around 15 Wh and also here the kinetic energy of 25 kW would be sufficient to charge the 15 kW into the battery without help from the main engine.

A lead acid battery for this use could have a nominal voltage of 72 V. This givs a discharge of around 300 A, which is normal for a starter battery at a temperature of 30°C and a weight of 15 kg for a 12 V unit. The total battery weight for the car would then be around 90 kg.

To get a good battery life you need to keep the charging voltage below 2,35-2,37 V/cell. When this voltage is reached, the charging stops. The battery should operate between 20-90% of its capacity. In this example the losses at 20 kW is around 5 kW and if the battery has this load during one third of the driving time the average energy loss would be 1,7 kW, which means that 50 W/cell must cooled away.

One condition for this type of driving is that the temperature in lead batteries only in exceptional cases exceeds 30°C. To get an effective cooling the Peltier effect can be used, as electric current is available and the cooling elements can be placed where they are needed. Cooling of the battery can be achieved, i.e. as described in Swedish patent application 8801318-0, where the neg. plates are double with a foil of copper between them connected to a water cooled cooling flange on the top of the battery. If there is free electrolyte in the cells, the top part of the electrolyte can be cooled. With absorbed or jelled electrolyte this type of cooling is not possible, as the lower part would be too warm. In the above examples we have used the less expensive starter batteries extended with a cooling system. Bipolar lead-acid batteries would be much better, reducing the battery weight to almost half.

Alkaline batteries in steel jars with only a few electrodes may be possible to cool by cooling the outside of the jars. But as a rule all batteries should be cooled in the way lead-acid batteries are cooled with cooling copper foils down to the bottom of the cell jar.

The driving range of this batteries will only depend of the amount of fuel you bring in the car and normally the energy you have in fuel will be more than 100 times the energy in the battery.

Instead of a battery, which shall deliver energy for a longer time to the driving motors, one can have a battery, which normally only is used during seconds or perhaps minutes depending on topography. If the vehicle mainly should be used in enviroment, where no exhaust fumes are allowed, the battery capacity can be slightly larger. In this case the relation in size between the battery, main motor-generator and drive motors may be changed. Also in this case there will be heavy load on the battery and even if the battery would be calculated for a capacity of 10-15 minutes it will still be necessary to cool the battery during all the driving at discharge and charge and this would still be part of the invention.

As the battery weight is reduced to a fraction of the weight of a battery operated vehicle, there will also be a corresponding decrease in battery cost.

The system is in particular advantageous for Stirling or steam engines, where it will be possible to have sealed units with the main engine and generators. Such engines can also use low emission fuels like ethanol, natural gas or even hydrogen stored in hydrids to completely eliminate the exhaust problem. The same applies to fuel cells, if and when they are satisfactorily developed to be reliable. But also Otto, Wankel, Diesel or turbine engines can at constant load be optimized for minimum exhaust emissions. In any case the main engine will be much smaller than present engines and with corresponding less exhaust emissions.

## Claims

1. Hybrid vehicle with a main engine connected to an electric generator, electric motors operating with current from the generator and connected to the driving wheels and an energy and power balancing electric accumulator, where the power of the main engine is sufficient to, together with the generator and wheel motors, operate the car in normal traffic without help of the accumulator, which will be used in addition thereto, when more energy is needed like at starting, acceleration and up hill driving and with regenerative braking from the elctric motors, characterized in that at normal driving conditions with a certain speed the energy from the regenerative braking to full stop is sufficient to charge the battery with the same energy amount taken from the battery to bring the vehicle to its present speed.

2. Vehicle according to claim 1, characterized in that the accumulator is force cooled at charging and discharging and has a capacity not higher than at normal driving it can be fully charged by the kinetic energy with help of the electric motors operating as generators during braking.

3. Vehicle according to claim 1 or 2, characterized in that the main engine and the electric generator are substituted by fuel cells or aluminium-air cells.

4. Vehicle according to any one of claims 1-3, characterized in that the cooling of the accumulator is achieved by Peltier elements on the cells.

5. Vehicle according to any one of claims 1-4, characterized in that the accumulator is large enough to occasionally operate the vehicle in environment sensitive areas without help from the main engine and generator.

6. Vehicle according to any of claims 1, 2, 4 or 5, in which the main motor is a Stirling_, Otto_, Wankel_, diesel_, steam_ or turbine motor, which independent of the speed of the vehicle has been adjusted to the best efficiency and a minimum of exhaust emissions.
